# EUROPEAN PATENT APPLICATION

(11) **EP 1 752 743 A1**
(43) Date of publication of application: **14.02.2007**
(21) Application number: 06388054.6
(22) Date of filing: 09.08.2006
(51) Int. Cl.: G01F 23/292

(54) **An improved liquid level sensor**

(30) Priority: 11.08.2005 AU 2005904330
(71) Applicant: Liquip International Pty Limited, Sydney, NSW 2000 (AU)
(72) Inventor: Lapinski, Miroslaw c/o Liquip Int. Pty Limited, Sydney, New South Wales 2000 (AU); Gregory, David c/o Liquip Int. Pty Limited, Sydney, New South Wales 2000 (AU)
(74) Representative: Nielsen, Kim Garsdal

(57) **Abstract**

Liquid level sensor (30) for detecting the presence or absence of liquid including a first light emitter (32), a prism (33) and a light detector (34). Reception of light at the light detector (34) is indicative of whether or not the prism (33) is surrounded by liquid. The level sensor (30) emits light in the visible spectrum that can be viewed by a person to verify that the level sensor (30) is operating.

## Description

### Technical Field

This invention relates to an improved liquid level sensor.

### Background to the Invention

Liquid level sensing devices are used in storage and transport tanks to indicate to a controlling or communication system when the liquid level has reached a particular point. Typical applications are (a) positioned near the top of the tank, when the information is used to stop further flow in order to prevent an overfill and (b) positioned near the bottom of the tank, when the information is used to initiate a delivery of liquid into the tank in order to refill it or to simply confirm that the tank has completely emptied.

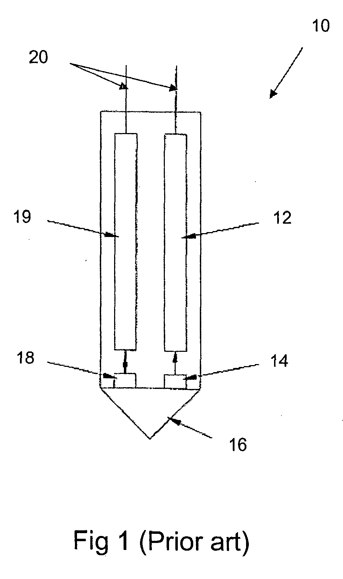

Referring to Figure 1, a known type of liquid level sensor 10 is illustrated. The operation of sensor 10 is based on the change in the refractive index between glass in air and glass in liquid. When light is projected into a prism in air, a large majority of the light is reflected off the surface of the glass internally and the prism can be shaped such that the reflected light can be intercepted and measured. When the external surface of the prism is submerged in a liquid such as a hydrocarbon the refractive index changes substantially such that the majority of the light is refracted out of the prism and there is essentially no light reaching the measurement point.

Liquid sensor 10 comprises an input electronic circuit 12, an infra red light emitting diode 14, a glass prism 16, a light receiving diode 18, an output electronic circuit 19 and connecting electrical cables 20. Light is generated by diode 14 and projected on to the angled face of the prism 16. Depending on the refractive index between the prism 16 and the surrounding fluid, the light may be refracted through the surface or reflected internally off the surface. When the prism is surrounded by air the light is reflected, and the angle of the prism is formed to direct the reflected light off the internal surfaces to intersect with diode 18. Diode 18 converts the energy of the light into electrical energy, powers output circuit 19 and provides a signal via cables 20. When the prism is surrounded by a liquid the light is refracted out of the prism, and no light reaches diode 18. Thus, no signal is provided via cables 20. This type of device is fully described in applicant's United States patent no US 6,363,784, the contents of which are incorporated herein by reference.

The light emitting diode 14 used in the above described liquid level sensor emits light in the infra-red range and is therefore not visible to the naked eye. Hence, such sensors require sophisticated electronic monitoring systems to analyse their operation to verify that they are working. Often these electronic monitoring systems cannot be employed in hazardous areas such as petroleum tanks as they may be capable of producing a spark.

### Summary of the Invention

In a first aspect the present invention provides a liquid level sensor for detecting the presence or absence of liquid including a first light emitter; a prism; a light detector; detection of light by the light detector is indicative of whether or not the prism is surrounded by liquid; and the level sensor emits light in the visible spectrum that can be viewed by a person to verify that the level sensor is operating correctly.

Visually checking the operation of the liquid level sensor by the presence of light emitted from the sensor does away with the need for complex monitoring arrangements.

The first light emitter may be operable to emit light in the visible spectrum that causes illumination of the prism that can be viewed by a person.

The sensor may include a second light emitter coupled to the light detector and which is operable to emit light in the visible spectrum, and when the light detector detects light emitted by the first light emitter it causes operation of the second light emitter.

The first light emitter may include a light emitting diode.

The light detector may be a light-receiving diode.

The second light emitter may be a light emitting diode.

### Brief Description of the Drawings

An embodiment of the present invention will now be described, by way of example only, with reference to the accompanying drawings, in which:
Figure 1 is a schematic view of a prior art liquid level sensor;
Figure 2 is a schematic view of a liquid level sensor according to an embodiment of the present invention; and
Figure 3 is a schematic view illustrating a liquid storage facility fitted with liquid level sensors according to figure 2 used for overfill protection.

### Detailed Description of the Preferred Embodiment

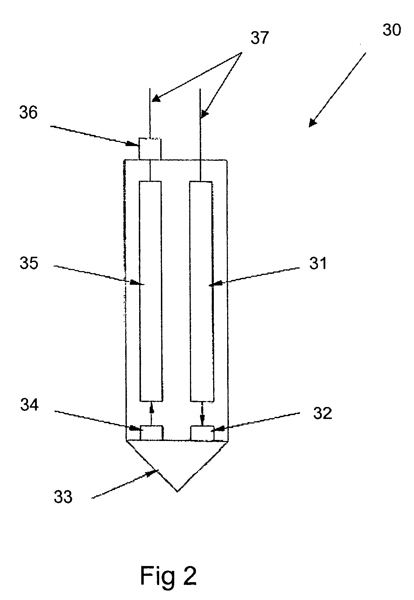

Referring to figure 2, a liquid sensor 30 is shown including a first light emitter in the form of one or more light emitting diodes 32 that emit light both in the infra red spectrum and in the visible light spectrum. Sensor 30 further includes a prism 33, and a light detector in the form of light receiving diode 34 and a second light emitter in the form of light emitting diode 36 that emits at least a portion of light in the visible spectrum. Light emitting diode 36 is coupled to light receiving diode by way of electronic circuit 35.

Electronic input circuit 31 powers light-emitting diode 32 which emits a portion of visible light. This light can be viewed by looking into prism 33 to verify the correct operation of the input side of the sensor 30.

When the prism is surrounded by air, light is reflected within prism 33 to be detected by light receiving diode 34, converted into power and an output signal is generated within electronic circuit 35. This signal communicates with the control system via cables 37 and also powers visible light emitting diode 36. The presence of visible light from diode 36 confirms the correct operation of the output circuit 35. Thus liquid sensor 30 provides its own diagnostic display without the need for expensive and sophisticated electronic tools.

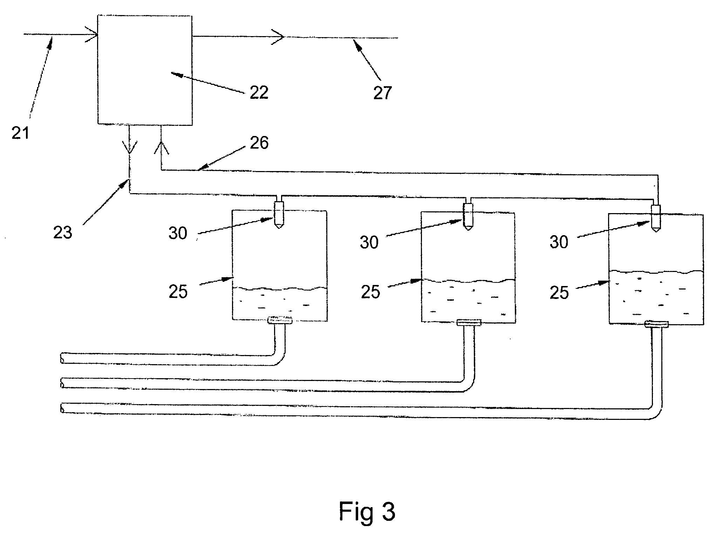

Referring to figure 3, a system employing liquid sensors 30 for overfill protection in storage tanks is illustrated. A control unit 22 is driven by power supply 21. Control unit 22 supplies power via cable 23 to multiple liquid sensors 30 wired in series and mounted on separate tanks 25. A return cable 26 then signals the status of the systems to control unit 22. A permissive or non-permissive result is determined by the controller and a control signal is communicated by cable 27. At the time of installation, the operation of each sensor can be checked by verifying that the prism portion is illuminated when the sensor is switched on. When in air, the light emitting diode 36 should also be illuminated. Immersing the sensor in liquid should cause light emitting diode 36 to switch off.

In figure 3, a fault in any one or more of the sensors will cause a non-permissive signal on cable 27. A user can verify if each of the sensors is working correctly by verifying that each of the light emitting diodes 36 provided on each sensor are illuminated when each of the tanks 25 are not filled. Without the visual diagnostics the use of sophisticated electronic analysis equipment is necessary to identify the faulty sensor.

Checks on both input and output circuits of each sensor separately provides information on the locality of any faults should they occur.

Any reference to prior art contained herein is not to be taken as an admission that the information is common general knowledge, unless otherwise indicated.

Finally, it is to be appreciated that various alterations or additions may be made to the parts previously described without departing from the spirit or ambit of the present invention.

## Claims

1. A liquid level sensor for detecting the presence or absence of liquid including:
a first light emitter;
a prism;
a light detector;
detection of light by the light detector is indicative of whether or not the prism is surrounded by liquid; and
the level sensor emits light in the visible spectrum that can be viewed by a person to verify that the level sensor is operating.

2. A liquid level sensor according to claim 1 wherein the first light emitter is operable to emit light in the visible spectrum that causes illumination of the prism that can be viewed by a person.

3. A liquid level sensor according to either claim 1 or claim 2 wherein the sensor includes a second light emitter coupled to the light detector and which is operable to emit light in the visible spectrum, and when the light detector detects light emitted by the first light emitter it causes operation of the second light emitter.

4. A liquid level sensor according to any preceding claim wherein the first light emitter includes a light emitting diode.

5. A liquid level sensor according to any preceding claim wherein the light detector is a light-receiving diode.

6. A liquid level sensor according to claim 3 wherein the second light emitter is a light emitting diode.
